# EUROPÄISCHE PATENTANMELDUNG

(11) **EP 1 080 816 A2**
(43) Veröffentlichungstag der Anmeldung: **07.03.2001**
(21) Anmeldenummer: 00117867.2
(22) Anmeldetag: 19.08.2000
(51) Int. Cl.: B23H 9/00

(54) **Verfahren zur Herstellung von Hohlräumen in metallischen Werkstücken**

(30) Priorität: 02.09.1999 DE 19941840
(71) Anmelder: Frembgen, Fritz-Herbert, D-87700 Memmingen (DE)
(72) Erfinder: Frembgen, Fritz-Herbert, 87700 Memmingen (DE)
(74) Vertreter: Kloiber, Thomas, Dr. Dipl.-Phys.

(57) **Zusammenfassung**

Die Erfindung betrifft ein Verfahren zur Herstellung von Hohlräumen (5) in metallischen Werkstücken (1) , insbesondere in Einspritzdüsen für Dieselmotoren mit mindestens einer Hauptbohrung (3) und mindestens einer Versorgungsbohrung (4), insbesondere für die Kraftstoffzufuhr, wobei mindestens eine Elektrode (2) in die Hauptbohrung (3) eingebracht wird und der Hohlraum (5) und/oder die Verbindung zur Versorgungsbohrung (4) mit Hilfe eines elektrolytischen Abtragungsprozesses ausgebildet wird. Aufgabe der Erfindung ist es ein Verfahren aufzuzeigen, durch das auf die Verwendung eines zusätzlichen Waschvorgangs verzichtet werden kann. Die der Erfindung zugrunde liegende Aufgabe wird dadurch gelöst, daß die Versorgungsbohrung (4) zumindest zeitweise mit Elektrolyt durchspült wird.

## Beschreibung

Die Erfindung betrifft ein Verfahren zur Herstellung von Hohlräumen in metallischen Werkstücken, insbesondere in Einspritzdüsen für Dieselmotoren mit mindestens einer Hauptbohrung und mindestens einer Versorgungsbohrung, insbesondere für die Kraftstoffzufuhr, wobei mindestens eine Elektrode in die Hauptbohrung eingebracht wird und der Hohlraum und/oder die Verbindung zur Versorgungsbohrung mit Hilfe eines elektrolytischen Abtragungsprozesses ausgebildet wird.

Bei einem bekannten Herstellungsprozeß von Einspritzdüsen wird eine Hauptbohrung in das Werkstück eingebracht. Danach erfolgt die Fertigung der Versorgungsbohrung. Der Nenndurchmesser der Versorgungsbohrung bei Einspritzdüsen für Dieselmotoren mit geringer Leistung beträgt oftmals weniger als ein Millimeter. Beim Fertigungsprozeß gelangen Verschmutzungen wie Ölrückstände vom Bohren oder kleinste Metallspäne in die Versorgungsbohrung und in die Hauptbohrung. Für einen elektrolytischen Abtragungsprozeß ist es notwendig, daß Hauptbohrung und Versorgungsbohrung frei von Verschmutzungen sind, da diese eine Isolationsschicht an der Metalloberfläche bilden, so daß es beim elektrolytischen Abtragungsprozeß zu einer ungleichmäßigen Abtragung von Metall kommt.

Um diese negativen Folgen zu vermeiden, wird das Werkstück nach Einbringung der Bohrungen mittels zeit- und kostenintensiver Waschvorgänge von den Verschmutzungen befreit. Aufgrund des oftmals sehr geringen Durchmessers der Versorgungsbohrung ist die Wirkung der Kapillarkräfte besonders groß. Ölrückstände lassen sich nur durch einen sehr aufwendigen Waschprozeß unter hohem Druck und Einsatz von teuren Detergentien entfernen. Nach den Waschvorgängen wird dann die Versorgungsbohrung nach außen hin abgedichtet und der eigentliche elektrolytische Abtragungsprozeß beginnt. Es wird eine Spannung an die in der Hauptbohrung befindliche Elektrode angelegt. Elektrolytflüssigkeit wird über die Elektrode zugeführt, Metall abgetragen und die Elektrolytflüssigkeit wird dann wieder vollständig durch die Hauptbohrung abgeführt. Dieser Prozeß wird solange fortgeführt, bis der Hohlraum seine gewünschte Größe erreicht hat und eine Verbindung zwischen Haupt- und Versorgungsbohrung besteht.

Aufgabe der Erfindung ist es ein Verfahren aufzuzeigen, durch das auf die Verwendung eines zusätzlichen Waschvorgangs verzichtet werden kann.

Die der Erfindung zugrunde liegende Aufgabe wird dadurch gelöst, daß die Versorgungsbohrung zumindest zeitweise mit Elektrolyt durchspült wird. Die Elektrolytflüssigkeit gelangt durch die Elektrode oder an dieser vorbei in die Hauptbohrung. Durch die hohe Strömungsgeschwindigkeit trägt die Elektrolytflüssigkeit Verschmutzungen von der Oberfläche ab. Ist die Hohlraumbildung bis zur Versorgungsbohrung vorgedrungen, strömt Elektrolyflüssigkeit durch die Versorgungsbohrung nach außen. Aufgrund der Durchflußmenge und -geschwindigkeit, werden Ölrückstände und sonstige Verschmutzungen ausgespült. Damit die Abtragung von Metall in der Versorgungsbohrung ein bestimmtes Maß nicht überschreitet, kann der Durchfluß durch Schließen der Versorgungsbohrung unterbrochen werden.

Dieses neue Verfahren ermöglicht die Einsparung von zusätzlichen Waschvorgängen, die mit erheblichen Kosten verbunden sind. Zusätzlich wird enorm viel Zeit eingespart, da auf die mit den Waschvorgängen verbundenen Auf- und Umbauten verzichtet werden kann.

Läßt man die Versorgungsbohrung längere Zeit geöffnet, kommt es zu einer asymmetrischen Ausbildung des Hohlraums, da das gesamte Strömungsbild, von dem die Form des Hohlraums abhängig ist, verändert wird. Ein Teil der Elektrolytflüssigkeit wird durch die Versorgungsbohrung abgeführt, wodurch die Abtragung an der der Versorgungsbohrung gegenüberliegenden Seite verlangsamt wird. Die Ausbildung von asymmetrischen Hohlräumen ist für viele Anwendungen von Vorteil. Soll der Hohlraum symmetrisch ausgeformt sein, empfiehlt es sich die Versorgungsbohrung gegen Ende des Verfahrens zu schließen, wodurch es zu einer Rückbildung der Asymmetrie kommt. Dieser Effekt läßt sich dadurch erklären, daß die weniger stark abgetragenen Stellen durch die Nähe zur Elektrode bei geschlossener Versorgungsbohrung wieder verstärkt abgetragen werden.

Gemäß einer vorteilhaften Ausgestaltungsform der Erfindung erfolgt die Spülung der Versorgungsbohrung von innen nach außen. Durch diese Spülungsrichtung werden nicht nur Verunreinigungen sehr gut entfernt, es kommt auch zu einem überraschenden Nebeneffekt. Die Einmündungskante der Versorgungsbohrung in den Hohlraum wird durch die vorbeiströmende Elektrolytflüssigkeit abgerundet und der gesamte Einmündungsbereich wird geglättet. Dieser Effekt beruht auf der hohen Fließgeschwindigkeit und den abtragenden Eigenschaften. Eine abgerundete und geglättete Kante hat den Vorteil, daß das gesamte Werkstück wesentlich druckstabiler ausgebildet ist. Dies ist mit Blick in die Zukunft von größter Wichtigkeit, da die Entwicklung von Dieselmotoren weiter in Richtung höhere Einspritzdrücke von bis zu mehreren tausend bar geht. Damit soll eine bessere Verbrennung des Kraftstoffs erreicht werden.

Gemäß einer weiteren vorteilhaften Ausgestaltungsform der Erfindung wird die Elektrolytflüssigeit durch die Elektrode zu und/oder abgeführt. Diese Ausgestaltungsform der Erfindung sorgt für ein gleichmäßiges Strömungsbild, welches für eine schnelle und gleichmäßige Ausbildung des Hohlraums von größter Wichtigkeit ist. Damit die Zu- oder Abführung der Elektrolytflüssigkeit optimal geschieht, ist die Elektrode als Röhrchen mit Aufbördelung ausgebildet. Die Elektrolytflüssigkeit kann die Elektrode so ungehindert passieren.

Um zu verhindern, daß es zur Abtragung von Metall an unerwünschten Stellen des Werkstücks kommt, werden diese Stellen durch Isolatoren geschützt. So kann keine Elektrolyflüssigkeit an diese Stellen gelangen, das Werkstück bleibt dort unbeschadet und in seiner ursprünglichen Form.

Verschmutzungen in der Elektrolytflüssigkeit beeinflußen das Abtragungsverhalten negativ. Daher ist es gemäß einer besonders vorteilhaften Ausgestaltungsform vorgesehen, daß die Eletrolytflüssigkeit von Verunreinigungen befreit wird. Es wird beispielsweise mit Öl und Schaumabscheidern gearbeitet.

Um das Verfahren klar zu strukturieren und einzelne Prozesse voneinander abzugrenzen ist es gemäß einer weiteren vorteilhaften Ausgestaltungsform der Erfindung vorgesehen, daß die Herstellung des Werkstücks in mehreren Teilschritten erfolgt.

Gemäß einer vorteilhaften Ausgestaltungsform der Erfindung ist vorgesehen, daß die Elektrolytflüssigkeit mindestens eine Öffnung im Isolator durchströmt. Durch diese Maßnahme wird für einen ungehinderten Ab- bzw. Zufluß der Elektrolyflüssigkeit gesorgt.

Gemäß einer weiteren, sehr vorteilhaften Ausgestaltungsform der Erfindung ist vorgesehen, daß die Elektrolytflüssigkeit mindestens einen Kanal unterhalb der Versorgungsbohrung durchströmt. Dieser Kanal kann in den Isolator integriert sein, so daß die Elektrolytflüssigkeit beispielsweise seitlich austreten kann. Es ist auch denkbar, daß der Kanal nicht in den Isolator integriert ist. So kann Isolationsmaterial eingespart werden.

Anhand der Zeichnungen, die Ausführungsbeispiele der Erfindung darstellen, wird diese näher beschrieben.

Es zeigen:
- Fig. 1:: eine schematische Darstellung eines Werkstücks mit eingebrachter Elektrode,
- Fig. 2:: eine schematische Darstellung des Werkstücks nach einem ersten Verfahrensteilschritt,
- Fig. 3:: eine schematische Darstellung des Werkstücks nach einem zweiten Verfahrensteilschritt und
- Fig. 4:: eine schematische Darstellung des Werkstücks nach einem dritten Verfahrensteilschritt.

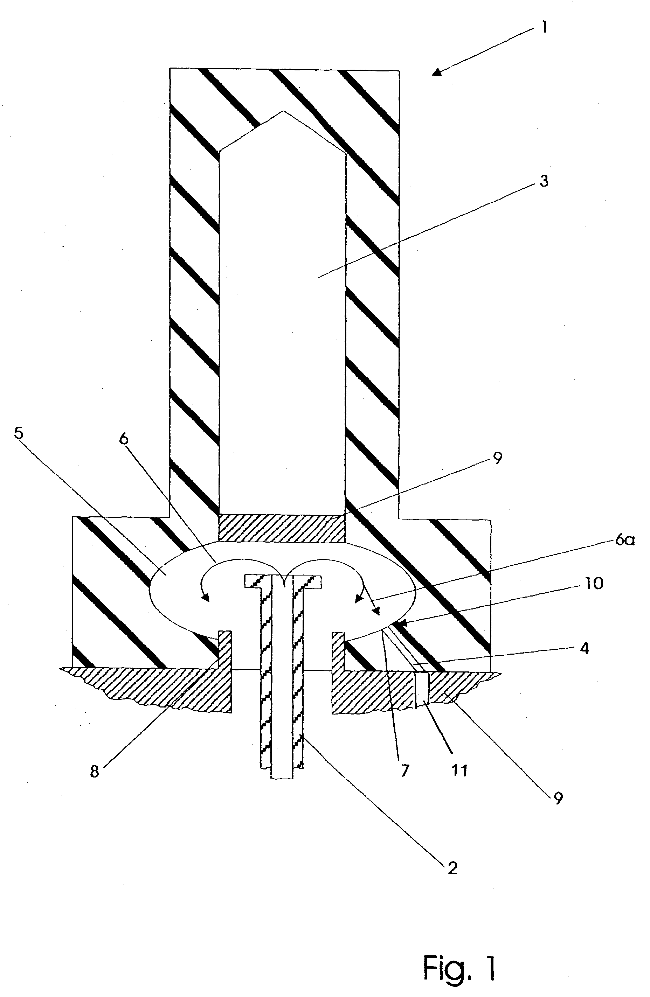

In Figur 1 ist ein Werkstück 1 in Form eines Düsenkörpers mit eingebrachter Elektrode 2 dargestellt. Im Werkstück 1 ist eine Hauptbohrung 3 und eine Versorgungsbohrung 4 zu erkennen. Die Elektrolytflüssigkeit gelangt durch die Elektrode 2 in das Werkstück, wo sich ein Hohlraum 5 ausbildet. Zu diesem Zweck ist die Elektrode 2 als Röhrchen mit Aufbördelung ausgebildet. Die Pfeile 6 geben die Fließrichtung der Elektrolytflüssigkeit an. Wie in Figur 1 ersichtlich, durchströmt ein Teil 6a der Elektrolytflüssigkeit die Versorgungsbohrung 4. Die Einmündungskante 7 der Versorgungsbohrung 4 in den Hohlraum 5 wird dadurch abgerundet und der gesamte Einmündungsbereich 10 wird geglättet, was für eine hohe Druckbelastung des Düsenkörpers im Betrieb von großem Vorteil ist. Infolge des Durchströmens der Elektrolytflüssigkeit durch die Versorgungsbohrung 4 kann auf zusätzliche zeit- und kostenintensive Waschvorgänge verzichtet werden. Um zu verhindern, daß es zur Abtragung von Metall an unerwünschten Stellen 8 des Werkstücks 1 kommt, werden diese Stellen 8 durch Isolatoren 9 geschützt. So kann keine Elektrolyflüssigkeit an diese Stellen 8 gelangen, das Werkstück 1 bleibt dort unbeschadet und in seiner ursprünglichen Form. Durch eine Öffnung 11 im Isolator 9 kann die Elektrolytflüssigkeit abfließen.

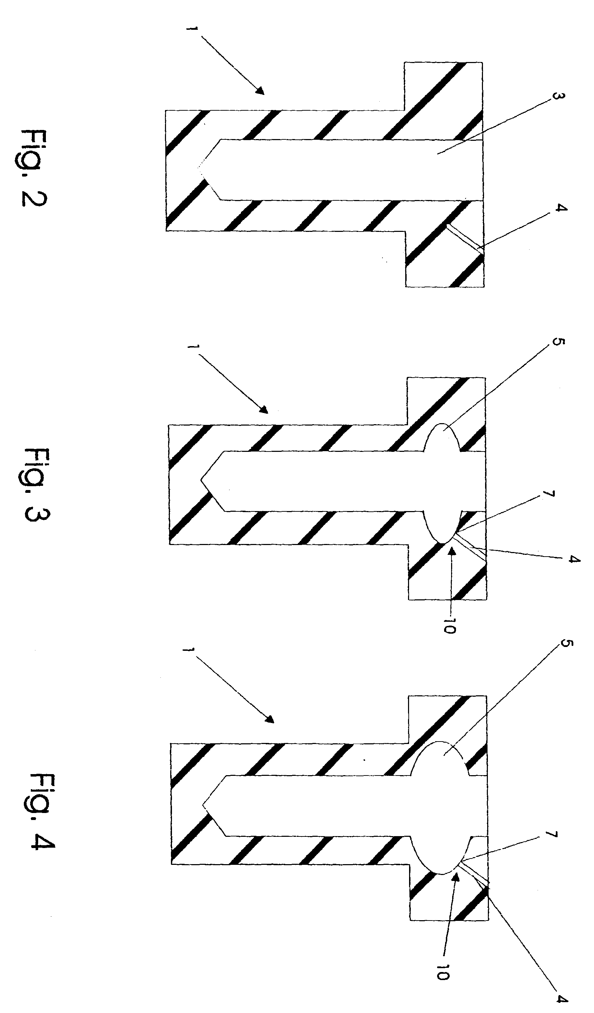

Figur 2 zeigt eine Darstellung des Werkstücks 1 nach einem ersten Verfahrensschritt. Es ist zu erkennen, daß eine Hauptbohrung 3 und eine Versorgungsbohrung 4 in das Werkstück 1 eingebracht sind. Nach diesem Verfahrensschritt müßten nun gemäß dem Stand der Technik zusätzliche Waschvorgänge durchgeführt werden.

In Figur 3 ist das Werkstück 1 nach einem zweiten Verfahrensschritt dargestellt. Der Hohlraum 5 ist bereits soweit ausgebildet, daß eine Verbindung zwischen Hohlraum 5 und Versorgungsbohrung 4 besteht. Die zur Hohlraumbildung benötigte Elektrode 2 und die Isolierung 9 von Teilstücken 8 des Werkstücks 1 sind in den Figuren 2 bis 4 der Übersicht halber weggelassen. Elektrolytflüssigkeit wird über die nicht gezeigte Elektrode 2 zu oder abgeführt. Teile der Elektrolytflüssigkeit durchströmen die Versorgungsbohrung 4 und sorgen für eine Befreiung des Werkstücks von Verschmutzungen. Gleichzeitig wird die Einmündungskante 7 abgerundet und der gesamte Einmündungsbereich 10 geglättet.

Figur 4 zeigt das Werkstück 1 nach einem dritten Verfahrensschritt. Der Hohlraum 5 ist fertig ausgebildet. Die Einmündungskante 7 ist abgerundet und der Einmündungsbereich 10 geglättet.

## Patentansprüche

1. Verfahren zur Herstellung von Hohlräumen (5) in metallischen Werkstücken (1), insbesondere in Einspritzdüsen für Dieselmotoren mit mindestens einer Hauptbohrung (3) und mindestens einer Versorgungsbohrung (4), insbesondere für die Kraftstoffzufuhr, wobei mindestens eine Elektrode (2) in die Hauptbohrung (3) eingebracht wird und der Hohlraum (5) und/oder die Verbindung zur Versorgungsbohrung (4) mit Hilfe eines elektrolytischen Abtragungsprozesses ausgebildet wird, **dadurch gekennzeichnet, daß** die Versorgungsbohrung (4) zumindest zeitweise mit Elektrolyflüssigkeit durchspült wird.

2. Verfahren nach Anspruch 1, **dadurch gekennzeichnet, daß** die Spülung der Versorgungsbohrung (4) in von innen nach außen erfolgt.

3. Verfahren nach einem der Ansprüche 1 oder 2, **dadurch gekennzeichnet, daß** Elektrolyflüssigkeit durch die Elektrode (2) zu und/oder abgeführt wird.

4. Verfahren nach einem der Ansprüche 1 bis 3, **dadurch gekennzeichnet, daß** Teile (8) des Werkstücks durch Isolatoren (9) geschützt sind.

5. Verfahren nach einem der Ansprüche 1 bis 4, **dadurch gekennzeichnet, daß** Verschmutzungen aus der Elektrolytflüssigkeit entfernt werden.

6. Verfahren nach einem der Ansprüche 1 bis 5, **dadurch gekennzeichnet, daß** die Herstellung des Werkstücks in mehreren Teilschritten erfolgt.

7. Verfahren nach einem der Ansprüche 1 bis 6, **dadurch gekennzeichnet, daß** Elektrolytflüssigkeit mindestens eine Öffnung (11) im Isolator (9) durchströmt.

8. Verfahren nach einem der Ansprüche 1 bis 7, **dadurch gekennzeichnet, daß** Elektrolytflüssigkeit mindestens einen Kanal unterhalb der Versorgungsbohrung (4) durchströmt.
